# EUROPEAN PATENT SPECIFICATION

(11) **EP 1 759 930 B1**
(45) Date of publication and mention of the grant of the patent: **28.05.2008**
(21) Application number: 06016870.5
(22) Date of filing: 11.08.2006
(51) Int. Cl.: B60R 16/023, B60R 16/02

(54) **Resin-molded structural body having water-stop structure in wire harness path**
Aus Kunststoff gegossener struktureller Körper mit Wasserstoppstruktur im Kabelbaumkanal
Corps structurel moulé de résine avec structure d'arrêt d'eau dans le chemin du faisceau

(30) Priority: 30.08.2005 JP 2005250214
(43) Date of publication of application: 07.03.2007
(73) Proprietor: YAZAKI CORPORATION, Minato-ku Tokyo 108-8333 (JP)
(72) Inventor: Kaneko, Nobutaka c/o Yazaki Parts Co., Ltd., Kakegawa-shi Shizuoka (JP); Maebashi, Akemi c/o Yazaki Parts Co., Ltd., Kakegawa-shi Shizuoka (JP)
(74) Representative: Grünecker, Kinkeldey, Stockmair & Schwanhäusser Anwaltssozietät

(56) References cited:
- EP-A1- 0 798 167
- EP-A1- 0 859 442
- US-A- 4 815 984
- US-A1- 2004 017 648
- US-A1- 2005 045 361

## Description

### BACKGROUND OF THE INVENTION

### 1. Field of the Invention

This invention relates to a resin-molded structural body (molded of a synthetic resin), such as an electric connection box (that is, an electric junction box) (such for example as a relay box and a fuse box) and a protector for protecting a wire harness, used in a vehicle such for example as an automobile, and more particularly to a resin-molded structural body having a water-stop structure in a wire harness path formed within the resin-molded structural body.

### 2. Related Art

Generally, a wire harness, used for example in the wiring of an electric system of an automobile, is protected by a resin-molded structural body (molded of a synthetic resin) such for example as a protector so that a group of wires of the wire harness will not be damaged by an external force and others.

Such a protector for receiving the wire harness to protect it has an outlet portion from which the wire harness is exposed to the exterior of the protector, and a liquid such as rain water can intrude into this outlet portion, and therefore there is known the type of protector having a water-stop mechanism or a separate member serving as a water-stop member.

As one example of protectors with such a water-stop member, there is known the type of protector comprising a protector body having a main receiving groove and a branch receiving groove (communicating with the main receiving groove) which jointly define a wire harness path for receiving a wire harness branching into a T-shape, and a lid for closing the main receiving groove and the branch receiving groove, and a waterproof sheet for sealing a boundary portion between a main wire portion of the wire harness received in the main receiving groove and a branch wire portion of the wire harness received in the branch receiving groove (see JP-A-2005-151763 Publication).

In the invention of this Patent JP-A-2005-151763, although the protector can have a good water-stop function even against a liquid (such as rain water) splashed back, for example, from the wire harness extending outwardly from the horizontally-open outlet portion of the protector, this structure is relatively costly.

A resin-molded structural body according to the preamble of claim 1 is known from US 2005/0 045 361 A1.

### SUMMARY OF THE INVENTION

This invention has been made in view of the above circumstances, and an object of the invention is to provide a resin-molded structural body having a water-stop structure, in which the intrusion of a liquid (such as rain water) into the wire harness path from an outlet portion of this path can be prevented at a low cost.

The above object has been achieved by a resin-molded structural body of the present invention having the features recited in claim 1.

In the resin-molded structural body of claim 1, a water-stop wall is formed on the portion of the inner peripheral surface at a position located inside from the outlet portion of the hollow tubular portion, and extends in the direction intersecting the direction of extending of the wire harness path, and therefore the intrusion of a liquid from the outlet portion of the hollow tubular portion can be prevented at a low cost. And besides, the water-stop wall is formed integrally with the hollow tubular portion, and this is desirable from the viewpoint of the cost.
Furthermore the water-stop wall includes a first water-stop wall portion which is formed on the upper surface portion of the inner peripheral surface, and projects substantially perpendicularly from the upper surface portion toward the lower surface portion of the inner peripheral surface, and a second water-stop wall portion which is formed on one of the opposed side surface portions of the inner peripheral surface, and projects substantially perpendicularly from the one side surface portion toward the other side surface portion. Therefore, even when the outlet portion of the hollow tubular portion is open horizontally (that is, laterally) with respect to the resin-molded structural body, a better water-stop function against a liquid, splashed back, for example, from the wire harness extending outwardly from the outlet portion, can be achieved.

In the present invention, the intrusion of a liquid (such as rain water) into the wire harness path from the outlet portion of this path can be prevented at the low cost.

The present invention has been briefly described above. Details of the invention will become more manifest upon reading the following Section "DETAILED DESCRIPTION OF THE PREFERRED EMBODIMENTS" with reference to the accompanying drawings.

### BRIEF DESCRIPTION OF THE DRAWINGS

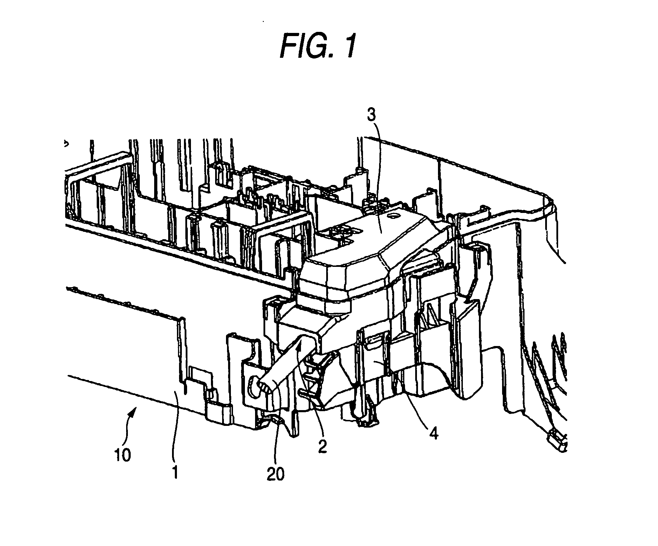

[0023] Fig. 1 is a perspective view of an important portion of one preferred embodiment of a resin-molded structural body of the present invention having a water-stop structure in a wire harness path.
Fig. 2 is a partly-broken, perspective view showing the water-stop structure (which is an important portion of the resin-molded structural body of this embodiment) in the wire harness path.
Fig. 3 is a perspective view of a portion of the resin-molded structural body separated therefrom for showing a condition of Fig. 2.

### DETAILED DESCRIPTION OF THE PREFERRED EMBODIMENTS

A preferred embodiment of the present invention will now be described in detail with reference to Figs. 1 to 3.

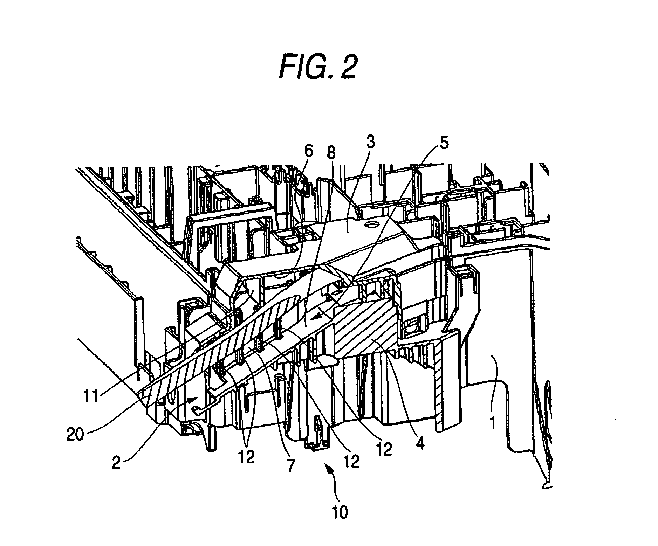

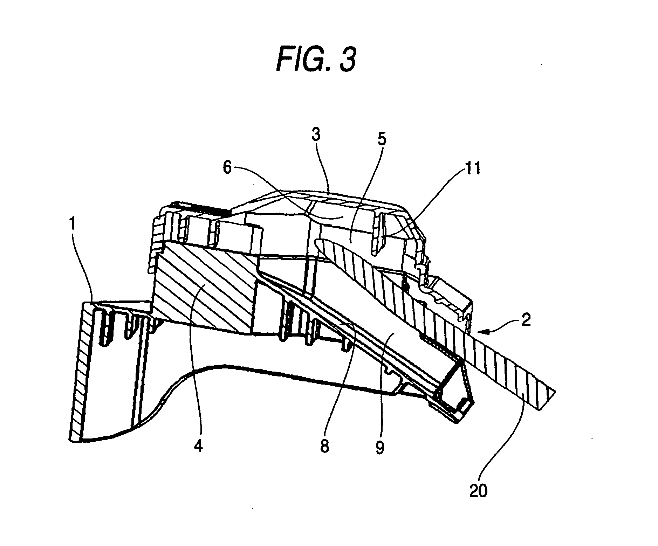

Fig. 1 is a perspective view of an important portion of one preferred embodiment of a resin-molded structural body of the invention having a water-stop structure in a wire harness path, Fig. 2 is a partly-broken, perspective view showing the water-stop structure (which is an important portion of the resin-molded structural body of this embodiment) in the wire harness path, and Fig. 3 is a perspective view of a portion of the resin-molded structural body separated therefrom for showing a condition of Fig. 2.

As shown in Figs. 1 to 3, the electric connection box 10 embodying the invention is, for example, a relay box, a fuse box or the like used in a vehicle such for example as an automobile, and this electric connection box is the resin-molded structural body whose constituent elements are molded of a synthetic resin. An upper cover (not shown) and a lower cover (not shown) are attached to a connection box body 1 of the electric connection box 10, and the upper cover and the lower cover respectively cover upper and lower surfaces of the connection box body 1 except one side portion 4 thereof.

In this electric connection box 10, electrical parts (not show), such as relays and fuses, are received in the connection box body 1, and a wire harness 20 (comprising a bundle of wires) connected to the plurality of electrical parts (not shown) is installed on the connection box body 1, and the wire harness 20 is led out through the wire harness path 5 formed between the connection box body 1 and a side protector cover 3 mounted on the connection box body 1.

More specifically, the one side portion 4 of the connection box body 1 and the side protector cover 3, attached to the one side portion 4 to cover the same, jointly form a hollow tubular portion having an inner peripheral surface (defined by an upper surface 6, one side surface 7, a lower surface 8 and the other side surface 9) defining the wire harness path 5 for guiding part of the wire harness 20 in a longitudinal direction thereof. In order to prevent the intrusion of a liquid from an outlet portion 2 of the hollow tubular portion from which the wire harness 20 is exposed to the exterior of the wire harness path 5, water-stop wall portions are formed on those portions of the upper surface 6 and the one side surface 7 which are at a position located inside from the outlet portion 2, each of these water-stop wall portions extending in a direction intersecting the direction of extending of the wire harness path 5.

The above water-stop wall portions include the first water-stop wall portion 11 which is molded integrally with the side protector cover 3, and is formed on and projects perpendicularly from the upper surface 6 toward the lower surface 8, and the plurality of second water-stop wall portions 12 which are molded integrally with the connection box body 1, and is formed on and project perpendicularly from the one side surface 7 toward the other side surface 9. Incidentally, even in the case where only the first water-stop wall portion 11 is provided as the above water-stop wall portion, this is effective.

In this electric connection box 10, the water-stop wall portions 11 and 12 are formed on those portions of the upper surface 6 and the one side surface 7 at a position located inside from the outlet portion 2, and extend in the direction intersecting the direction of extending of the wire harness path 5, and therefore the intrusion of a liquid from the outlet portion 2 can be prevented at a low cost.

In this electric connection box 10, even in the case where at least the first water-stop wall portion 11 is formed on the inner surface (upper surface 6) of the side protector cover 3, a water-stop function against a liquid, splashed back, for example, from the wire harness 20 extending outwardly from the outlet portion 2 (which is open horizontally (or laterally) with respect to the electric connection box 10), can be achieved, and therefore this is desirable.

In this electric connection box 10, the water-stop wall portions include the first water-stop wall portion 11 formed on the upper surface 6, and the second water-stop wall portions 12 formed on the one side surface 7, and therefore the better water-stop function can be achieved.

The present invention is not limited to the above embodiment, and suitable modifications, improvements, etc., can be made. Furthermore, the material, shape, dimensions, numerical value, form, number, disposition, etc., of each of the constituent elements of the above embodiment are arbitrary, and are not limited in so far as the invention can be achieved.

In the invention, the intrusion of a liquid (such as rain water) into the wire harness path from the outlet portion of this wire harness path can be prevented at the low cost, and therefore the invention is useful not only for the above electric connection box but also for other various resin-molded structural bodies including a protector.

## Claims

1. A resin-molded structural body comprising:
a hollow tubular portion having an inner peripheral surface defining a wire harness path (5) for guiding at least a part of a wire harness (20) in a longitudinal direction thereof; and
a water-stop wall (11,12) formed on said inner peripheral surface at a position located inside of an outlet portion (2) of said hollow tubular portion for preventing an intrusion of a liquid from said outlet portion (2) of said
hollow tubular portion from which said wire harness (20) is exposed to an exterior of said wire harness path (5), said water-stop wall (11,12) extending in a direction intersecting a direction of extending of said wire harness path (5),
**characterized in that** said water-stop wall includes a first water-stop wall portion (11) which is formed on an upper surface portion (6) of said inner peripheral surface, and projects substantially perpendicularly from said upper surface portion (6) toward a lower surface portion (8) of said inner peripheral surface, and a second water-stop wall portion (12) which is formed on one of opposed side surface portions (7) of said inner peripheral surface, and projects substantially perpendicularly from said one side surface portion (7) toward the other side surface portion (9).

## Patentansprüche

1. Harzgeformter struktureller Körper, der umfasst:
einen hohlen röhrenförmigen Abschnitt, der eine Innenumfangsfläche aufweist, die einen Kabelbaum-Weg (5) definiert, der wenigstens einen Teil eines Kabelbaums (20) in einer Längsrichtung desselben führt; und
eine Wasserschutzwand (11, 12), die an der Innenumfangsfläche an einer Position ausgebildet ist, die sich innerhalb eines Auslass-Abschnitts (2) des hohlen röhrenförmigen Abschnitts befindet, um ein Eindringen einer Flüssigkeit über den Auslass-Abschnitt (2) des hohlen röhrenförmigen Abschnitts zu verhindern, an dem der Kabelbaum (20) zu einer Außenseite des Kabelbaum-Weges (5) freiliegt, wobei sich die Wasserschutzwand (11, 12) in einer Richtung erstreckt, die eine Richtung schneidet, in der der Kabelbaum-Weg (5) verläuft,
**dadurch gekennzeichnet, dass** die Wasserschutzwand einen ersten Wasserschutzwand-Abschnitt (11), der an einem Oberseiten-Abschnitt (6) der Innenumfangsfläche ausgebildet ist und im Wesentlichen senkrecht von dem Oberseiten-Abschnitt (6) zu einem Unterseiten-Abschnitt (8) der Innenumfangsfläche vorsteht, sowie einen zweiten Wasserschutzwand-Abschnitt (12) enthält, der an einem von einander gegenüberliegenden Seitenflächen-Abschnitten (7) der Innenumfangsfläche ausgebildet ist und im Wesentlichen senkrecht von dem einen Seitenflächen-Abschnitt (7) zu dem anderen Seitenflächen-Abschnitt (9) hin vorsteht.

## Revendications

1. Corps structurel moulé en résine comportant :
une partie tubulaire creuse ayant une surface périphérique interne définissant un passage de faisceau de câble (5) afin de guider au moins une partie d'un faisceau de câble (20) dans une direction longitudinale de celui-ci ; et
une paroi d'arrêt d'eau (11, 12) formée sur ladite surface périphérique interne dans une position située à l'intérieur d'une partie de sortie (2) de ladite partie tubulaire creuse afin d'empêcher une intrusion d'un liquide par ladite partie de sortie (2) de ladite partie tubulaire creuse depuis laquelle ledit faisceau de câble (20) est exposé à l'extérieur dudit passage de faisceau de câble (5), ladite paroi d'arrêt d'eau (11, 12) s'étendant dans une direction coupant une direction d'extension dudit passage de faisceau de câble (5),
**caractérisé en ce que** ladite paroi d'arrêt d'eau comprend une première partie de paroi d'arrêt d'eau (11) qui est formée sur une partie de surface supérieure (6) de ladite surface périphérique interne, et dépasse de manière sensiblement perpendiculaire à ladite partie de surface supérieure (6) vers une partie de surface inférieure (8) de ladite surface périphérique interne, et une deuxième partie de paroi d'arrêt d'eau (12) qui est formée sur une des parties de surface latérale opposée (7) de ladite surface périphérique interne, et dépasse de manière sensiblement perpendiculaire à ladite première partie de surface latérale (7) vers l'autre partie de surface latérale (9).
